# EUROPEAN PATENT APPLICATION

(11) **EP 4 517 674 A1**
(43) Date of publication of application: **05.03.2025**
(21) Application number: 23194743.3
(22) Date of filing: 31.08.2023
(51) Int. Cl.: G06T 15/06, G06T 19/00

(54) **METHOD AND SYSTEM FOR ACCURATELY CONSTRUCTING ONE OR MORE COMPLEX ASSETS IN AN INDUSTRIAL ENVIRONMENT FOR RENDERING THE ONE OR MORE COMPLEX ASSETS IN A COMPUTER SIMULATED ENVIRONMENT**

(71) Applicant: Siemens Aktiengesellschaft, 80333 München (DE)
(72) Inventor: DEWAN, Surbhi, 560100 Bengaluru, Karnataka (IN); RAJ, Arun, 635110 Hosur, Tamil Nadu (IN); SINGH, Saurabh Narayan, 81739 München (DE)
(74) Representative: Horn Kleimann Waitzhofer Schmid-Dreyer Patent- und Rechtsanwälte PartG mbB

(57) **Abstract**

Disclosed is a system (100) and method (300) for accurately constructing one or more complex assets (105-1 to 105-N) in an industrial environment for rendering the one or more complex assets in a computer simulated environment. The method comprising identifying, by the processing unit (202), one or more complex assets in the industrial environment from a scene to be rendered in the computer simulated environment; segmenting, complex assets (105-1 to 105-N) into individual components using machine learning algorithms; simulating lighting of each individual components of the one or more complex assets using ray tracing techniques; analyzing, the simulated individual components of the complex assets using an inference model to identify a structure of the complex assets; and constructing the complex assets in the computer simulated environment based on the identified structure of the complex assets.

## Description

The present invention generally relates to computer simulated environments, and more specifically to a method and system for efficiently constructing one or more complex assets in an industrial environment for accurately constructing one or more complex assets in an industrial environment for rendering the one or more complex assets in a computer simulated environment.

Industrial environments include plurality of machines or assets in an automated factory, or IoT devices interacting with one another. Industrial environments thus often include multiple interconnected components in signal communication with each other, either directly or across a network. An emerging concept complementing the rapid industrial development is "the industrial metaverse". The industrial metaverse is a next generation of fully immersive three-dimensional collaborative space that integrates multiple technical directions such as digital twin, internet of things, industrial internet, augmented reality, virtual reality, mixed reality, and the like. Metaverse is a virtual universe with shared, 3D virtual spaces where virtual assets can be owned, placed and interacted with. It also allows different users to interact with each other in the collaborative environment. These virtual assets can be simple entities like chair or table, or complex entities like industrial machinery.

For this purpose, a typical IIoT (Industrial Internet of Things) solution in a metaverse would include capturing the real-world data and then rendering the same in the industrial environment in a photorealistic manner to provide an immersive experience to the user. In an industrial environment, such as for manufacturing plants or factory floor, there are numerous machines and corresponding standard operating procedures that the operators/workers need to follow for optimum functioning of the industrial environment. The metaverse simulations can be used in such cases to schedule and train workers/operators using photorealistic rendering of scenarios and immersing them in a virtual world to create real-world experiences. For example, a manufacturing plant hosts a digital workflow for repairing a machine in a VR space. Employees log into the virtual space via VR, meet in a shared space via 3D avatars, and communicate to repair the machine together.

However, recreation of real-world objects along with their motion in real-time in a virtual environment requires resource-rich information along with adequate computing power to process and make inferences. Changes in the actual environment should be readily visible in the virtual environment in near real-time to avoid discounting critical decision windows. The problem of recreation of real-world objects becomes even more challenging in case of complex assets such as wind turbine or a CNC machine. The users in the virtual environment must be able to interact with an asset in a manner like how users would interact with the corresponding real-world asset. This may include simple as well as complex scenarios, where simple scenario could be rotation of chair and complex scenario could be rectifying fault or testing of industrial machine. While recreating a complex scene inside metaverse, it is important to make sure that the scene can be decomposed into smaller assets. For example, a scan of a room should be able to be converted to the assets in the room, i.e., the table, the chair, and other devices in the room. This becomes even more complex when the scan is of a complex asset like a factory floor. Another challenge arises in such complex assets is that the assets can be hidden when being mapped. Therefore, recreating the entire with missing scene information is a challenge in scene recreation in the metaverse.

In current scenarios, there are several methods known to recreate the scenes in the virtual environment using ray tracing of objects. However, the current solutions do not take into consideration the challenges of recreation of complex assets especially in industrial environments. This leads to inaccurate information being presented to the users in the metaverse. It should be noted that this becomes even more dangerous when a critical decision in the industrial environment is dependent of the information or scene being presented to an operator/worker in the virtual environment during a remote maintenance operation or critical failure being observed remotely.

In the light of the above, there exists a need to provide a system and method for accurately constructing one or more complex assets in an industrial environment for rendering the one or more complex assets in a computer simulated environment.

Therefore, the object of the invention is to provide a system and method for accurately constructing one or more assets in an industrial environment for rendering the one or more complex assets in a computer simulated environment.

Throughout the present disclosure, the term "industrial environment" may refer to plurality of industrial assets connected with each other to achieve a function. The industrial environment may be comprised of industrial assets such as industrial machines, industrial devices, industrial controllers, and so forth. Example industrial environment may be a factory with a plurality of assets such as a power plant, wind farm, power grid, manufacturing facility, process plants and so on. Although the present disclosure has been described generally in terms of the industrial environment being some form of a factory floor, the term "industrial environment" as used in the preferred embodiments and claims according to the present disclosure should be understood broadly to include not only factory floors, but also other indoor facilities and buildings such as hospitals, office spaces, apartments, complexes, schools, training centers, and so forth. The term "industrial environment" may also include other outdoor facilities such as a parking lot, a traffic junction, and vehicles such as airplanes, ships and trucks.

In view of the present invention, the industrial environment maybe comprised of simple assets and complex assets. The simple assets in the industrial environment are characterized by straightforward design and less complexity of processing of the images acquired. In contrast, the complex assets are characterized by complex designs and higher complexity of processing of the complex asset. In an example, simple assets are boxes, tools, pumps, sensors, operators, etc. and the complex assets are turbines, motors, CNC machines, cranes, etc.

Throughout the present disclosure, the term "one or more assets" as used herein refers to any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. The one or more assets may also include automated systems such as automated robots, semi-automated robots, remote-controlled robots, robotic arms, etc. that are employed in the industrial environment to perform an operation or task. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. These assets can further be classified as "simple assets" and "complex asset" and then pf the present invention. processed accordingly as per the embodiments t Throughout the present disclosure, the term "computer simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of one or more animated scenes being rendered corresponding to the plurality of entities interacting in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be one or more entities being rendered in the computer simulated collaborative environment or metaverse.

The metaverse can be realized by a hosting environment. The hosting environment can be for example be implemented as a cloud environment, an edge-cloud environment and/or on specific devices, e.g., mobile devices.

The object of the invention is achieved by a method for efficiently constructing one or more complex assets in an industrial environment for rendering the one or more complex assets in a computer simulated environment. The method comprises identifying one or more complex assets in the industrial environment from a scene to be rendered in the computer simulated environment. The method comprises segmenting the one or more complex assets into individual components using segmentation techniques. The method comprises simulating lighting of each individual components of the one or more complex assets using ray tracing techniques. The method comprises analyzing the simulated individual components of the one or more complex assets using an inference model to identify a structure of the complex assets. The method comprises constructing the complex assets in the computer simulated environment based on the identified structure of the complex assets.

According to an embodiment, the method of simulating each individual components of the one or more complex assets comprises identifying the individual components of the one or more complex assets having at least one part of the complex assets not in direct line of sight of a single image acquisition device in the industrial environment. The method comprises calculating a position of the image acquisition device and an angle of the image acquisition device capable of capturing the identified at least one part of the complex assets not in direct line of sight of a single image acquisition device. The method comprises determining image acquisition devices from a plurality of image acquisition devices based on the calculation of the position of the image acquisition device and an angle of the image acquisition device. The method comprises simulating the one or more individual components of the complex assets based on the lighting received from the determined image acquisition devices using ray tracing techniques.

According to an embodiment, the method of simulating the individual components of the one or more complex assets using ray tracing techniques comprises casting a plurality of rays from a point of view of the user into the scene comprising one or more complex assets. The method comprises determining points of intersection between said rays and complex assets within said scene. The method comprises calculating ray hit points between the said rays and complex assets having the highest intersection using one or more mathematical algorithms thereby determining spatial information and object geometry of the complex assets. The method comprises simulating reflections and refractions of the said rays based on calculated ray hit points and optical properties of the said complex assets and image acquisition devices.

According to an embodiment, the method of analyzing the simulated individual components of the one or more complex assets using an inference model to identify a structure of the complex assets comprises assigning a unique identifier to a particular individual component of the complex asset when a first set of plurality of rays are casted on the particular complex asset at a first instant of time. The method comprises identifying, by the processing unit, the unique identifier of the particular individual component of the complex asset when a second set of plurality of rays are casted on the particular complex asset at a second instant of time based on calculating relative coordinates of the ray hit points of the individual component with respect to other individual components of the complex asset. The method comprises clustering a first plurality of rays and a second plurality of rays based on the unique identifier of the individual components of the complex asset. The method comprises identifying a structure of the complex assets based on the clustering of the plurality of rays of the complex assets.

According to an embodiment, the method of analyzing the simulated individual components of the one or more complex assets using an inference model to identify a structure of the complex assets comprises identifying the individual components of the one or more complex assets having at least one part of the complex assets not in direct line of sight of any of the image acquisition devices in the industrial environment. The method comprises generating the identified at least one part of the complex assets using the inference model having a trained machine learning algorithm based on one or more visible parts of the individual components of the complex assets. The method comprises identifying a structure of the complex asset based on the results of the inference model.

According to an embodiment, the method of identifying the structure of complex asset further comprises selecting one or more complex assets substantially similar to the results of the inference model for a particular complex asset based on a comparison of the results of the inference model with a plurality of complex assets stored in a database. The method comprises presenting the selected one or more complex assets on a graphical user interface for user selection in order to identify the structure of the complex asset.

The object of the invention is also achieved by an apparatus for accurately constructing one or more complex assets in an industrial environment for rendering the one or more complex assets in a computer simulated environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for accurately constructing one or more complex assets in an industrial environment for rendering the one or more complex assets in a computer simulated environment. The system comprises a computer simulated collaborative environment rendering one or more scenes corresponding to real-world assets in an industrial environment. The system comprises a plurality of image acquisition devices communicatively coupled to the computer simulated environment. Herein, the plurality of image acquisition devices are installed in the industrial environment. The apparatus is communicatively coupled to the plurality of image acquisition devices and the computer simulated collaborative environment. The apparatus is configured for accurately constructing one or more complex assets in an industrial environment for rendering the one or more complex assets in a computer simulated environment according to the aforementioned method steps.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
FIG 1 is a block diagram of a system for accurately constructing one or more complex assets in an industrial environment for rendering the one or more complex assets in a computer simulated environment, according to an embodiment of the present invention;
FIG 2 is a block diagram of an exemplary apparatus for accurately constructing one or more complex assets in an industrial environment for rendering the one or more complex assets in a computer simulated environment, according to an embodiment of the present invention; and
FIG 3 is a flowchart depicting steps of a method for accurately constructing one or more complex assets in an industrial environment for rendering the one or more complex assets in a computer simulated environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

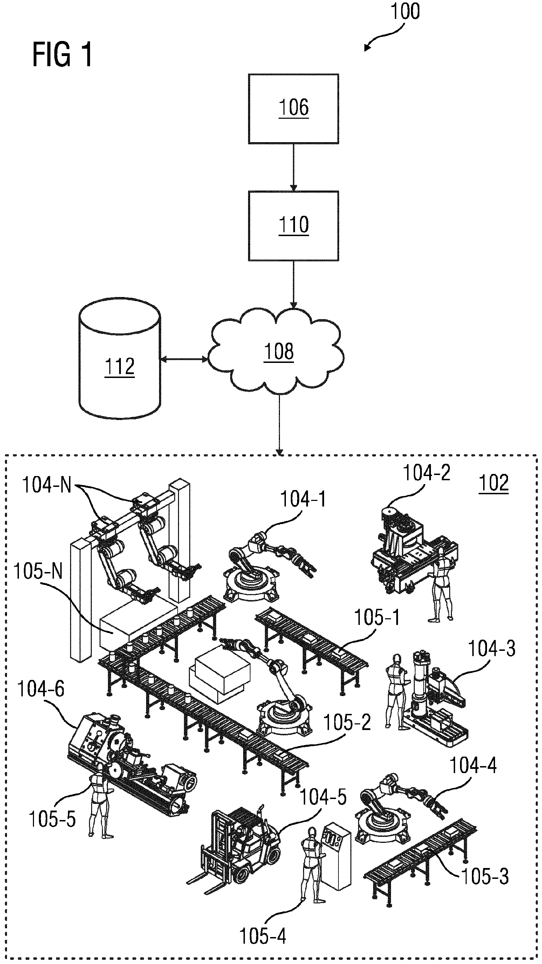

FIG 1 is a block diagram of a system 100 for accurately constructing one or more complex assets in an industrial environment for rendering the one or more complex assets in a computer simulated environment, according to an embodiment of the present invention. The system 100 comprises a computer simulated environment 102, one or more assets 104-1 to 104-N and 105-1 to 105-N being rendered on the computer simulated environment 102, one or more image acquisition devices 106, an apparatus 110, and a database 112 communicating over a communication network 108. The computer simulated environment 102 three-dimensional (3D) representation of a real or physical world. It can be understood as a virtual world representing one or more assets 104-1 to 104-N of the real-world such as machines, robots, conveyors, cranes, drills, etc. The computer-simulated environment 102 is accessible by a user, i.e., it is accessible from the real/physical world. In particular, the computer-simulated environment 102 can be understood as the "metaverse". It is also possible to interact with the computer-simulated environment 102, i.e., to influence or use processes, components and/or functions in the computer-simulated environment 102. The user or the avatar may interact with the objects rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more animated scenes being rendered corresponding to the plurality of entities interacting in the industrial environment. The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The metaverse can be realized by a hosting environment. The hosting environment can be for example be implemented as a cloud environment, an edge-cloud environment and/or on specific devices, e.g., mobile devices.

The one or more assets 104-1 to 104-N and 105-1 to 105-N maybe devices, machinery, robots, equipment, conveyors, crane, etc. sin the industrial environment. The one or more assets 104-1 to 104-N and 105-1 to 105-N are captured using one or more image acquisition devices 106 and then rendered on the computer simulated environment 102.

In the context of the present invention, the industrial environment maybe comprised of simple assets 105-1 to 105-N and complex assets 104-1 to 104-N. The simple assets 105-1 to 105-N in the industrial environment are characterized by straightforward design and less complexity of processing of the images acquired. In contrast, the complex assets are characterized by complex designs and higher complexity of processing of the complex asset. In an example, simple assets are boxes, tools, pumps, sensors, operators, etc. and the complex assets are turbines, motors, CNC machines, cranes, etc.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 110 may include a module for managing access control for a plurality of digital twins 102-1 to 102-N interacting in a computer simulated collaborative environment over a distributed network.

Particularly, the system 100 comprises a cloud computing device configured for providing cloud services for accurately constructing one or more complex assets in an industrial environment for rendering the one or more complex assets in a computer simulated environment. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

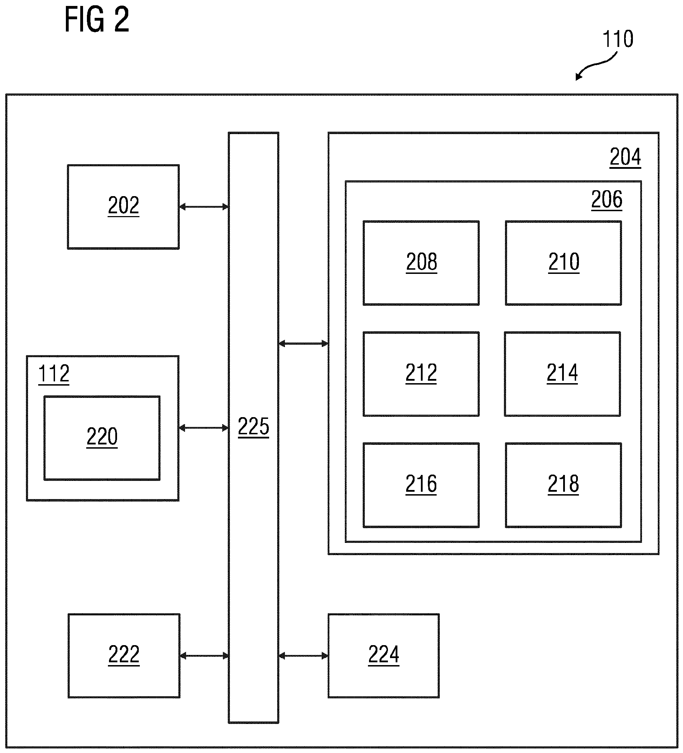

FIG 2 is a block diagram of an exemplary apparatus 110 for constructing one or more complex assets 104-1 to 104-N in an industrial environment for rendering the one or more complex assets in a computer simulated environment, according to an embodiment of the present invention. In an exemplary embodiment, the apparatus 110 is communicatively coupled to the computer simulated environment 102 rendering one or more assets 104-1 to 104-N, the one or more image acquisition devices 106, and the database 112.

The apparatus 110 may be a personal computer, a laptop computer, a tablet, a server, a virtual machine, and the like. The apparatus 110 includes a processing unit 202, a memory 204 comprising a module 206, a storage unit 218 comprising a database 112, an input unit 222, an output unit 224 and a bus 226.

The processing unit 202 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 202 may also include embedded controllers, such as generic or programmable logic devices or arrays, application specific integrated circuits, single-chip computers, and the like.

The memory 204 may be non-transitory volatile memory and/or non-volatile memory. The memory 204 may be coupled for communication with the processing unit 202, such as being a computer-readable storage medium. The processing unit 202 may execute instructions and/or code stored in the memory 204. A variety of computer-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 204 includes the module 206 stored in the form of machine-readable instructions on any of the above-mentioned storage media and may be in communication to and executed by the processing unit 302. When the machine-readable instructions are executed by the processing unit 202, the module 206 causes the processing unit 202 to accurately construct one or more complex assets in an industrial environment for rendering the one or more complex assets in a computer simulated environment.

The module 206 further comprises a data acquisition module 208, a complex asset identification module 210, a complex asset segmentation module 212, a simulation module 214, an analysis module 216, an inference module 218, and a rendering module 220.

The data acquisition module 208 is configured for acquiring visual data from the industrial environment. The data acquisition module 208 is configured for acquiring data pertaining to the one or more assets 104-1 to 104-N interacting in the industrial environment. The assets 104-1 to 104-N may be simple assets and complex assets in the industrial environment. The data acquisition module 208 is configured for acquiring data in one or more formats that may comprises at least one of a static image data, dynamic image data, signal data and acoustic data. The data acquisition module 208 is configured for pre-processing of data received from the one or more image acquisition devices 106. The data acquisition module 208 is configured for acquiring visual data from the image acquisition devices 106 such as image sensors, camera modules, digital cameras, surveillance cameras, aerial imaging devices, 3D imaging devices, thermal imaging devices, wearable cameras and the like.

The complex asset identification module 210 is configured for analyzing the scene captured by the data acquisition module 208. The complex asset identification module 210 is configured for identifying the scene using one or more machine learning models on the visual data received from the data acquisition module 208. The complex asset identification module 210 is configured for preprocessing the visual data to enhance the quality, reduce noise, or normalize the data for better output. Further, the complex asset identification module 210 is configured for extracting relevant features such as visual descriptors including color, texture, shape, edges or key points. These features are derived to represent distinctive characteristics of objects, scenes, or patterns within the images. The complex asset identification module 210 is configured for analyze the extracted features and then identifying objects or elements within it. Further, the complex asset identification module 210 performs object detection, semantic segmentation, scene classification and depth estimation using the one or more machine learning models for respective tasks in scene identification. A further capability of the complex asset identification module 210 is to understand the real-world and classify the one or more assets in the scene as "simple assets" and "complex assets" in the identified scene.

The complex asset segmentation module 212 is configured for segmenting the one or more complex assets into individual components using segmentation techniques. The complex asset segmentation module 212 employs a set of methods and processes used to partition or divide the complex asset into distinct and meaningful regions or individual components. The primary function of the complex asset segmentation module 212 is separate areas of interest within the complex asset into individual components based on their visual characteristics. These visual characteristics can include color, intensity, texture, shape, or other properties. The complex asset segmentation module 212 several steps of boundary detection, region classification, feature extraction, clustering or classification, region growing and splitting, morphological operations etc. to segment the complex asset into individual components.

The simulation module 214 is configured for simulating lighting of each individual components of the one or more complex assets using ray tracing techniques. The simulation module 214 is configured for casting a plurality of rays from a point of view of the user into the scene comprising one or more complex assets. The simulation module 214 is configured for determining points of intersection between said rays and complex assets within said scene. The simulation module 214 is configured for calculating ray hit points between the said rays and complex assets having the highest intersection using one or more mathematical algorithms thereby determining spatial information and object geometry of the complex assets. The simulation module 214 is configured for simulating reflections and refractions of the said rays based on calculated ray hit points and optical properties of the said complex assets and image acquisition devices.

The analysis module 216 is configured for analyzing the simulated individual components of the one or more complex assets using an inference model to identify a structure of the complex assets. The analysis module 216 assigning a unique identifier to a particular individual component of the complex asset when a first set of plurality of rays are casted on the particular complex asset at a first instant of time. The analysis module 216 identifying the unique identifier of the particular individual component of the complex asset when a second set of plurality of rays are casted on the particular complex asset at a second instant of time based on calculating relative coordinates of the ray hit points of the individual component with respect to other individual components of the complex asset. The analysis module 216 is configured for clustering a first plurality of rays and a second plurality of rays based on the unique identifier of the individual components of the complex asset. The analysis module 216 is configured for identifying a structure of the complex assets based on the clustering of the plurality of rays of the complex assets.

The inference module 218 is configured for identifying the individual components of the one or more complex assets having at least one part of the complex assets not in direct line of sight of any of the image acquisition devices in the industrial environment. The inference module 218 is configured for generating the identified at least one part of the complex assets using the inference model having a trained machine learning algorithm based on one or more visible parts of the individual components of the complex assets. The inference module 218 is configured for identifying a structure of the complex asset based on the results of the inference model.

The rendering module 220 is configured for constructing the complex assets in the computer simulated environment based on the identified structure of the complex assets. The rendering module 220 is configured for rendering the one or more constructed complex assets in the computer simulated environment.

The processing unit 202 is configured for performing all the functionality of the module 206. The processing unit 202 is configured to identify one or more complex assets in the industrial environment from a scene to be rendered in the computer simulated environment. The processing unit 202 is configured to segment the one or more complex assets into individual components using segmentation techniques. The processing unit 202 is configured to simulate the lighting of each individual components of the one or more complex assets using ray tracing techniques. The processing unit 202 is configured to analyze the simulated individual components of the one or more complex assets using an inference model to identify a structure of the complex assets. The processing unit 202 is configured to construct the complex assets in the computer simulated environment based on the identified structure of the complex assets.

The storage unit 218 comprises the database 112 for storing the one or more complex assets previously generated or constructed in the computer simulated environment. The storage unit 218 and/or database 112 may be provided using various types of storage technologies, such as solid state drives, hard disk drives, flash memory, and may be stored in various formats, such as relational databases, non-relational databases, flat files, spreadsheets, and extended markup files, etc.

The input unit 222 may provide ports to receive input from input devices such as keypad, touch-sensitive display, camera (such as a camera receiving gesture-based inputs), etc. capable of receiving set of requirements for constructing the complex assets, receiving inputs for selection of the most suitable model for a particular asset, et.. The display unit 224 may provide ports to output data via output device with a graphical user interface for displaying one or more complex assets in the computer simulated virtual environment. The bus 226 acts as interconnect between the processing unit 202, the memory 204, the storage unit 218, the input unit 222, and the display unit 224.

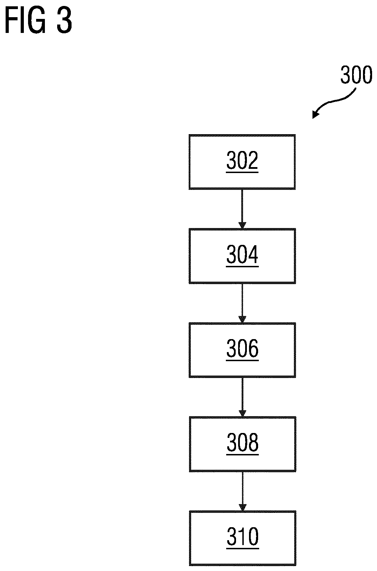

Those of ordinary skilled in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

FIG 3 is a flowchart depicting steps of a method 300 for accurately constructing one or more complex assets 104-1 to 104-N in an industrial environment for rendering the one or more complex assets in a computer simulated environment, according to an embodiment of the present invention.

At 302, one or more complex assets in the industrial environment are identified from a scene to be rendered in the computer simulated environment. The scene in the industrial environment is captured using one or more image acquisition devices 106 installed in the industrial environment. The image acquisition devices 106 are electronic device configured for capturing, acquiring, and transmitting data from the industrial environment to the apparatus 110. In an embodiment, the image acquisition devices 106 may be at least one of: a camera, an image sensor, a scanner, a digital camera, a surveillance camera, a 3D imaging device, a LIDAR, or a combination thereof. Notably, the primary function of the image acquisition devices 106 is to acquire visual data from the industrial environment such as the factory floor and transmit the acquired data to the apparatus 110 for further identifying the one or more complex assets in the scene.

In an exemplary implementation, the data acquisition device 106 is a camera configured to capture still image data and/or video image data of the one or more assets in the industrial environment. The term "camera" is understood to represent anything from one camera to a group of cameras arranged in a suitable configuration and outputting one or more video feeds of corresponding covered areas of the industrial environment. In an example, the data acquisition device 106 may be located in the industrial environment; for example, the cameras may be disposed throughout the industrial environment, mounted at various locations therein. In another example, the data acquisition device 106 may be integrated in an aerial vehicle; for example, the cameras may be mounted on a body of a drone and pointing to various directions therefrom to cover different areas of the industrial environment or pointing at a particular entity based on a set of requirements.

In another exemplary implementation, the image acquisition devices 106 are surveillance cameras used for security and monitoring purposes. The surveillance cameras are designed to capture and record images or videos of specific areas or premises. Surveillance cameras may include features like night vision capabilities, motion detection, remote monitoring, and video analytics for intelligent video processing.

In another exemplary implementation, the image acquisition devices 106 are 3D imaging devices that capture depth information along with visual imagery, enabling the creation of three-dimensional representations of objects or scenes. Such devices may use technologies like structured light, time-of-flight, stereo vision, or LiDAR (Light Detection and Ranging) to acquire 3D data.

In another exemplary implementation, the image acquisition devices 106 are thermal imaging devices that capture infrared radiation emitted by assets in the factory floor to generate images based on temperature differences. Notably, this would provide additional information for quality scene generation during night or low-light conditions.

In another exemplary, implementation the image acquisition devices 106 are wearable cameras that may be arranged on body of the workers/operator in order to enable system to capture visual data of the assets, machines or an activity being performed from the perspective of the workers/operators on the factory floor. Advantageously, the system can switch between different views when rendering the one or more scenes providing a more immersive experience to an avatar in the metaverse.

The real-world scenes are identified from the industrial environment based on point of view of a particular user. It should be understood that the one or more scenes are identified from the point of view of the user viewing particular scenes in the metaverse. In an example, when a user or an avatar in metaverse is walking down a path in the metaverse, the point of view of the user may be a portion/area of the factory floor, which is detected in the metaverse and corresponding one or more scenes from the portion/area is identified to be rendered.

The scene acquired by the image acquisition devices 106 is processed to identify complex assets in the industrial environment. The real-world scene is identified using image processing techniques on the received visual data. The acquired visual data such as images and video data may undergo preprocessing steps to enhance the quality of the images or to remove noise or artifacts. Preprocessing techniques may include noise reduction, image filtering, color correction, or image enhancement algorithms. Further, the method involves extracting relevant features from the acquired images. Features can be various visual descriptors such as color, texture, shape, edges, or key points. These features are derived to represent distinctive characteristics of objects, scenes, or patterns within the images. The extracted features are then used to analyze the scene and identify one or more complex assets within it. Further, the complex assets can be identified using object detection algorithms within the scene, such as machines, conveyor belts, motors, trolleys, robots, sensors, actuators, etc. This can be achieved using object recognition algorithms, machine learning techniques, or pattern matching approaches.

Further, the visual data is divided into meaningful regions or segments based on their visual characteristics. This can involve classifying each pixel or region into two different categories: simple assets and complex assets. The method further comprises employing on or more machine learning algorithms for scene classification of the visual data. Assigning a label or category to the entire scene based on its overall content. The method includes training machine learning models to recognize and classify scenes based on predefined categories, such as simple assets and complex assets. It should be understood that once the one or more assets are identified and analyzed, the method comprises recognizing or classifying the scene based on the identified one or more assets in the scene. This can involve comparing the extracted features with a database of known scenes or using machine learning algorithms to match the scene characteristics with predefined scene categories. In an example, the method comprises performing object detection on the scene using a computer vision-based object detection model. This model will identify and locate different assets present in the scene. Object detection algorithms, such as YOLO (You Only Look Once), SSD (Single Shot Multibox Detector), or Faster R-CNN (Region-based Convolutional Neural Networks), can be utilized for this purpose.

At step 304, the one or more complex assets are divided into individual components using one or more machine learning algorithms. The one or more complex assets as identified from the scene are further segmented into individual components a set of methods and processes used to partition or divide the complex asset into distinct and meaningful regions or individual components. In an example, the method comprises employing segmentation techniques to identify different components of the complex asset. The method comprises separating areas of interest within the complex asset into individual components based on their visual characteristics. These visual characteristics can include color, intensity, texture, shape, or other properties. For segmenting the complex asset into individual components, the particular complex asset is identified, and boundaries are determined amongst different regions within the image. This helps to precisely define the extent of each segment. Further, pixels or small regions of the image are grouped into small regions or classes based on the visual attributes of each of the individual components. Pixels or regions of the same class are considered part of the same segment. Furthermore, in order to define different segments in the complex asset, the relevant features or descriptors such as color histograms, texture patterns or gradient information is extracted. Once the different bounding boxes are clearly defined, the method further comprises applying the one or more machine learning models such as classification and clustering algorithms to group similar regions together and assign classification labels to each segment.

At step 306, lighting of each individual components of the one or more complex assets are simulated using ray tracing techniques. In simulating the individual components of the one or more complex assets using ray tracing techniques, a plurality of rays are casted from a point of view of the user into the scene comprising one or more complex assets. The plurality of rays maybe casted using the one or more image acquisition devices 106 as aforementioned. Further, points of intersection between said rays and complex assets within said scene is determined. Once the point of intersection are determined, the ray hit points between the said rays and complex assets having the highest intersection is calculated using one or more mathematical algorithms thereby determining spatial information and object geometry of the complex assets. Consequently, reflections and refractions of the said rays are simulated based on calculated ray hit points and optical properties of the said complex assets and image acquisition devices. It should be noted that the ray tracing technique is a rendering technique that can realistically simulate the lighting of a scene and its objects by rendering physically accurate reflections, refractions, shadows, and indirect lighting. Ray tracing generates computer graphics images by tracing the path of light from the view camera (which determines your view into the scene), through the 2D viewing plane (pixel plane), out into the 3D scene, and back to the light sources. As it traverses the scene, the light may reflect from one object to another (causing reflections), be blocked by objects (causing shadows), or pass through transparent or semi-transparent objects (causing refractions). All of these interactions are combined to produce the final color and illumination of a pixel that is then displayed on the screen. This reverse tracing process of eye/camera to light source is chosen because it is far more efficient than tracing all light rays emitted from light sources in multiple directions.

At step 308, the simulated individual components of the one or more complex assets are analyzed using an inference model to identify a structure of the complex assets. The inference model is trained to identify a structure of the complex asset by accurately placing and combining each individual component to identify the structure of the complex asset. The inference model maybe a machine learning model trained to identify the structure of the complex asset based on analyzing each individual components and their positions in the complex asset.

The inference model is trained to accurately identify the complex asset based on the simulated one or more individual components of the complex asset.

According to an embodiment, the method of analyzing the simulated individual components of the one or more complex assets using an inference model to identify a structure of the complex assets comprises assigning a unique identifier to a particular individual component of the complex asset when a first set of plurality of rays are casted on the particular complex asset at a first instant of time. Further, the method comprises identifying the unique identifier of the particular individual component of the complex asset when a second set of plurality of rays are casted on the particular complex asset at a second instant of time based on calculating relative coordinates of the ray hit points of the individual component with respect to other individual components of the complex asset. Further, the method comprises clustering a first plurality of rays and a second plurality of rays based on the unique identifier of the individual components of the complex asset. Further, the method comprises identifying a structure of the complex assets based on the clustering of the plurality of rays of the complex assets.

Notably, after the individual components of the complex asset are simulated, there is a possibility that the complex asset is not accurately simulated. Furthermore, there is a also a possibility that the Therefore, the simulated individual components are analyzed using an inference model in order to accurately simulate the individual components. The inference model is configured for analyzing completeness of the simulated individual components and corresponding complex asset and then identifying a complete structure of the complex asset.

In an embodiment, the method of analyzing the simulated individual components of the one or more complex assets using an inference model to identify a structure of the complex assets comprises identifying the individual components of the one or more complex assets having at least one part of the complex assets not in direct line of sight of a single image acquisition device in the industrial environment. In an example, it is possible that a particular individual component or a part of the individual component is not in direct line of sight of the image acquisition device from the point of view of the user. Therefore, such individual components or part of the individual components may only be either be partially captured by the image acquisition of device or is not captured by the image acquisition device at all. In such cases, such portions in the individual components are identified. Further, the method comprises calculating a position of the image acquisition device and an angle of the image acquisition device capable of capturing the identified at least one part of the complex assets not in direct line of sight of a single image acquisition device. The inference model calculates the position and angle of a possible location of an image acquisition device from where the hidden individual components would be visible for simulation. Based on the calculation of the position of the image acquisition device and an angle of the image acquisition device, the image acquisition device is selected from a plurality of image acquisition devices installed in the industrial environment. Further, the method comprises simulating the one or more individual components of the complex assets based on the lighting received from the determined image acquisition devices using ray tracing techniques. Further, the method comprises identifying a structure of the complex asset based on the simulated one or more individual components not in line of sight of a single image acquisition device. Once the entire individual component is simulated, the structure of the complex asset is identified using the inference model.

In another embodiment, the method of analyzing the simulated individual components of the one or more complex assets using an inference model to identify a structure of the complex assets comprises identifying the individual components of the one or more complex assets having at least one part of the complex assets not in direct line of sight of any of the image acquisition devices in the industrial environment. Further, the method comprises generating the identified at least one part of the complex assets using the inference model having a trained machine learning algorithm based on one or more visible parts of the individual components of the complex assets. The trained machine learning algorithm is capable of automatically completing the missing portion of the individual component of the complex asset. In an example, the machine learning algorithm is trained on a dataset comprising plurality of such complex assets, such that the machine learning algorithm is capable of identifying missing pixels in the image and then generating the missing pixels to complete the structure of the complex asset. In an example, the trained machine learning algorithm maybe supervised machine learning model, unsupervised machine learning model, neural networks, reinforcement learning models, generative models. In a particular embodiment, the machine learning model is a generative adversarial network (GAN) which are pairs of networks (generator and discriminator) that compete to produce realistic data for the complex assets. Further, the method comprises identifying a structure of the complex asset based on the results of the inference model.

According to an embodiment, the method of identifying the structure of complex asset further comprises selecting one or more complex assets substantially similar to the results of the inference model for a particular complex asset based on a comparison of the results of the inference model with a plurality of complex assets stored in a database. The database comprises the plurality of complex assets in the industrial environment. Further, the method comprises presenting the selected one or more complex assets on a graphical user interface for user selection in order to identify the structure of the complex asset. The user is allowed to select the best possible option of the hidden asset and complete the structure of the complex asset. In an example, the complex asset is a CNC grinding machine, and the coolant tank is not visible from any of the image acquisition devices, then the coolant tank is generated using the inference model and then presented to the user to confirm the generation. At step 310, the complex assets are constructed in the computer simulated environment based on the identified structure of the complex assets. In an example, once the complex asset is accurately detected, it is constructed in the metaverse to be viewed by the users.

The present invention is capable of accurately creating complex assets in the metaverse. Notably, the present invention enables intelligent decomposition of complex assets in the industrial environment. Advantageously, the present invention is capable of accurately identifying a structure of the complex asset in the industrial environment and then recreating the same in the metaverse. Furthermore, the present invention provides a method to accurately determine a complete structure of the complex asset even when the complex asset is hidden from the image acquisition devices. Advantageously, the invention employs generative artificial intelligence algorithms to infer a possible structure of the complex asset and then recreate the same in the metaverse.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### LIST OF REFERENCES

- 100: system
- 102: computer simulated environment
- 104-1 to 104-N: complex assets
- 105-1 to 105-N: simple assets
- 106: image acquisition devices
- 108: communication network
- 110: apparatus
- 112: database
- 202: one or more processing units
- 204: memory unit
- 206: module
- 208: data acquisition module
- 210: complex asset identification module
- 212: complex asset segmentation module
- 214: analysis module
- 216: inference module
- 218: rendering module
- 220: storage unit
- 222: input unit
- 224: output unit
- 226: bus
- 300: flowchart depicting steps of a method for accurately constructing one or more complex assets in an industrial environment for rendering the one or more complex assets in a computer simulated environment

## Claims

1. A method (300) for accurately constructing one or more complex assets (105-1 to 105-N) in an industrial environment for rendering the one or more complex assets in a computer simulated environment, the method comprising:
identifying, by the processing unit (202), one or more complex assets (105-1 to 105-N) in the industrial environment from a scene to be rendered in the computer simulated environment;
segmenting, by the processing unit (202), the one or more complex assets (105-1 to 105-N) into individual components using one or more machine learning algorithms;
simulating, by the processing unit (202), lighting of each individual components of the one or more complex assets (105-1 to 105-N) using ray tracing techniques;
analyzing, by the processing unit (202), the simulated individual components of the one or more complex assets (105-1 to 105-N) using an inference model to identify a structure of the complex assets; and
constructing, by the processing unit (202), the complex assets (105-1 to 105-N) in the computer simulated environment based on the identified structure of the complex assets.

2. The method (300) according to claim 1, wherein simulating the individual components of the one or more complex assets (105-1 to 105-N) using ray tracing techniques comprises:
casting, by the processing unit (202), a plurality of rays from a point of view of the user into the scene comprising one or more complex assets(105-1 to 105-N);
determining, by the processing unit, points of intersection between said rays and complex assets (105-1 to 105-N) within said scene;
calculating, by the processing unit, ray hit points between the said rays and complex assets (105-1 to 105-N) having the highest intersection using one or more mathematical algorithms thereby determining spatial information and object geometry of the complex assets;
simulating, by the processing unit, reflections and refractions of the said rays based on calculated ray hit points and optical properties of the said complex assets (105-1 to 105-N) and image acquisition devices (106).

3. The method (300) according to claim 1 or 2, wherein analyzing the simulated individual components of the one or more complex assets (105-1 to 105-N) using an inference model to identify a structure of the complex assets comprises:
identifying, by the processing unit (202), the individual components of the one or more complex assets (105-1 to 105-N) having at least one part of the complex assets not in direct line of sight of a single image acquisition device in the industrial environment;
calculating, by the processing unit, a position of the image acquisition device (106) and an angle of the image acquisition device capable of capturing the identified at least one part of the complex assets not in direct line of sight of a single image acquisition device;
determining, by the processing unit, image acquisition devices from a plurality of image acquisition devices based on the calculation of the position of the image acquisition device and an angle of the image acquisition device;
simulating, by the processing unit, the one or more individual components of the complex assets (105-1 to 105-N) based on the lighting received from the determined image acquisition devices using ray tracing techniques; and
identifying, by the processing unit, a structure of the complex asset (105-1 to 105-N) based on the simulated one or more individual components not in line of sight of a single image acquisition device.

4. The method (300) according to any one of claims 1-3, wherein analyzing the simulated individual components of the one or more complex assets (105-1 to 105-N) using an inference model to identify a structure of the complex assets comprises:
assigning, by the processing unit (202), a unique identifier to a particular individual component of the complex asset when a first set of plurality of rays are casted on the particular complex asset at a first instant of time;
identifying, by the processing unit, the unique identifier of the particular individual component of the complex asset when a second set of plurality of rays are casted on the particular complex asset at a second instant of time based on calculating relative coordinates of the ray hit points of the individual component with respect to other individual components of the complex asset;
clustering, by the processing unit, a first plurality of rays and a second plurality of rays based on the unique identifier of the individual components of the complex asset; and
identifying, by the processing unit, a structure of the complex assets based on the clustering of the plurality of rays of the complex assets.

5. A method (300) according to any of the claims 1 or 2, wherein analyzing the simulated individual components of the one or more complex assets (105-1 to 105-N) using an inference model to identify a structure of the complex assets comprises:
identifying, by the processing unit (202), the individual components of the one or more complex assets (105-1 to 105-N) having at least one part of the complex assets not in direct line of sight of any of the image acquisition devices in the industrial environment;
generating, by the processing unit, the identified at least one part of the complex assets using the inference model having a trained machine learning algorithm based on one or more visible parts of the individual components of the complex assets;
identifying, by the processing unit, a structure of the complex asset based on the results of the inference model.

6. A method (300) according to claim 5, wherein identifying the structure of complex asset (105-1 to 105-N) further comprises:
selecting, by the processing unit (202), one or more complex assets substantially similar to the results of the inference model for a particular complex asset based on a comparison of the results of the inference model with a plurality of complex assets stored in a database;
presenting, by the processing unit, the selected one or more complex assets on a graphical user interface for user selection in order to identify the structure of the complex asset.

7. An apparatus (110) for accurately constructing one or more complex assets (105-1 to 105-N) in an industrial environment for rendering the one or more complex assets in a computer simulated environment (102), the apparatus comprising:
one or more processing units (202); and
a memory (204) communicatively coupled to the one or more processing units, the memory comprising a module stored in the form of machine-readable instructions executable by the one or more processing units, wherein the module is configured to perform the method steps according to claims 1 to 6.

8. A system (100) for accurately constructing one or more complex assets (105-1 to 105-N) in an industrial environment for rendering the one or more complex assets in a computer simulated environment, the system comprising:
a computer simulated environment (102) rendering one or more assets (104-1 to 104-N and 105-1 to 105-N) corresponding to real-world assets in an industrial environment;
a plurality of image acquisition devices (106) communicatively coupled to the computer simulated environment (102), wherein the plurality of image acquisition devices are installed in the industrial environment; and
an apparatus (110) according to claim 7, communicatively coupled to the plurality of image acquisition devices and the computer simulated collaborative environment, wherein the apparatus is configured for efficiently accurately constructing one or more complex assets in an industrial environment for rendering the one or more complex assets in a computer simulated environment t, according to any of the method claims 1 to 6.

9. A computer-program product, having computer-readable instructions stored therein, that when executed by a processing unit, cause the processing unit to perform method steps according to any of the claims 1 to 6.

10. A computer readable medium on which program code sections of a computer program are saved, the program code sections being loadable into and/or executable in a system to make the system execute the method steps according to any of the claims 1 to 6 when the program code sections are executed in the system.
